Europäisches Patentamt

European Patent Office

Office européen des brevets

(11) Publication number: **0 188 374**
**B1**

## EUROPEAN PATENT SPECIFICATION

(45) Date of publication of patent specification: **12.10.88**

(21) Application number: **86300231.7**

(22) Date of filing: **13.01.86**

(51) Int. Cl.⁴: **B 65 D 23/08, B 65 D 75/00, B 32 B 27/32, B 32 B 5/18**

(54) **Coextruded multilayer sheet and sleeve label made therefrom.**

(30) Priority: **14.01.85 US 691249**

(43) Date of publication of application:
**23.07.86 Bulletin 86/30**

(45) Publication of the grant of the patent:
**12.10.88 Bulletin 88/41**

(84) Designated Contracting States:
**AT BE CH DE FR GB IT LI LU NL SE**

(56) References cited:
**FR-A-2 340 249**

(73) Proprietor: **OWENS-ILLINOIS PLASTIC PRODUCTS INC.**
**One SeaGate**
**Toledo Ohio 43666 (US)**

(72) Inventor: **Karabedian, James Aram**
**4108 Partridge Lane**
**Toledo Ohio 43623 (US)**

(74) Representative: **Gore, Peter Manson et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a coextruded multilayer sheet adapted to form a tough sleeve label for wrapping around a container, the lebel adapted for solvent sealing, although the side seam seal can be made by ultrasonic, hot air, and heat sealing. The seam seal also can be made by hot melt adhesive.

Laminated (coextrusion coated) sheets for sleeve labels for containers have been disclosed in the prior art, for example, US—A—3,979,000, US—A—4,069,934 and US—A—3,760,968, all of which have been assigned to the present Applicant. US—A—4,463,861 also discloses a laminated (coextruded two-layer) sheet and a heat shrinkable sleeve label for wrapping containers. The laminated sheet sleeve label comprises a solid film comprising polystyrene containing more than 50% by weight of styrene residues and foamed film comprising polystyrene containing more than 50% by weight of styrene and optionally not more than 30% by weight of rubber.

The prior art coextruded multilayer sleeve labels having polystyrene-type layer do not have as much toughness as desired. In addition, there is a need for tough labels that are readily solvent sealable, especially for containers such as oriented plastics carbonated beverage bottles.

It has now been found possible to provide a tough attractive coextruded multilayer sheet sleeve label for a container such as an oriented plastics carbonated beverage container.

It has also been found possible to provide a coextruded multilayer sheet adapted to form a sleeve label, for instance, for wrapping a container and the side seam being sealed by solvent sealing, the sheet comprising a polystyrene foam layer adapted to be used next to the container and a solid skin layer adapted for decoration.

It has not being recognized in the art that a structure of a coextruded tough skin/brittle foam must not be too well bonded or the benefits of the toughness of the skin layer will be lost. However, as a practical matter, there must be some degree of adhesion. The present invention provides a means of balancing the adhesion between the tough skin layer and the brittle foam layer to desirably maximize the toughness of the total label structure. The toughness is maximized when the shear bond strength between the skin layer and the foam layer is as close to unity as possible but less than the yield strength of the skin layer.

The present invention provides a tough, attractive, sealable coextruded multilayer sheet adapted for forming a snug, wrinkle-free heat shrunk sleeve label around a container including an oriented plastics beverage bottle that tends to expand after filling. The tough sleeve label is easily sealable, a strong side seam being formed, for instance, by high speed sealing means such as ultrasonic, hot air and heat sealing. As mentioned, the label is easily sealed by solvent sealing and solves a problem of providing a tough label that can be solvent sealed on a production basis.

According to the present invention there is provided a coextruded multilayer sheet, adapted for use as a label sleeve on containers, the sheet comprising a foam layer for use on the inside of the sleeve next to the container, and an outer solid skin layer, characterised in that the skin layer and foam layer are coextruded from an extrudable blend comprising 30% by weight to 60% by weight of high density polyethylene, 10% by weight to 30% by weight of polystyrene, and 30% by weight to 50% by weight of a compatibility agent. The resultant label sleeve is tough and sealable on a high speed production basis.

The compatibility agent is a material which provides limited compatibility and limited adhesion between the skin layer and the foam layer at the interface thereof, to enhance the toughness of the skin, and is used in an amount effective therefor. The compatibility agent is such that the tough outer skin and foam layers are not so well bonded which would result in loss of the benefits of the toughness of the skin.

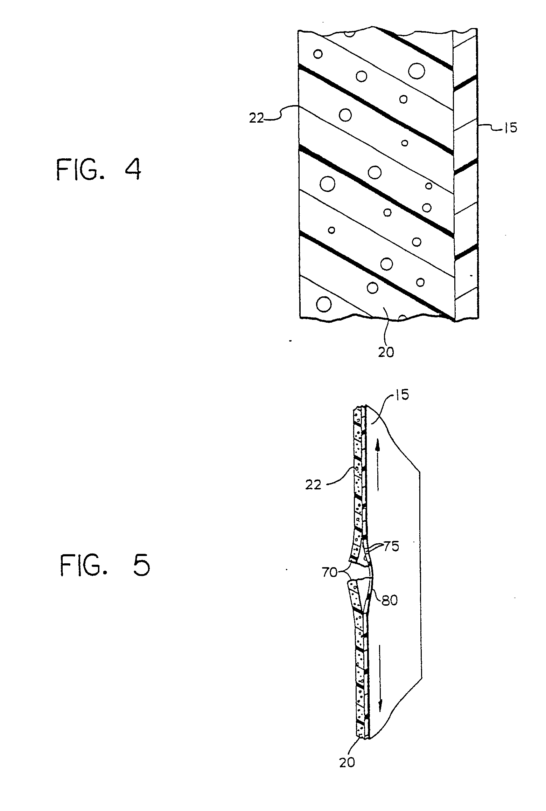

As is more fully described hereinbelow (with particular reference to and illustrated in Figure 5 of the accompanying drawings), whilst the skin layer is sufficiently adhered to the foam layer for normal integrity of the label structure when applied to a container, the shear bond strength of the skin and foam layers will be less than the yield strength of the tough skin to enhance the toughness of the total label structure. However, when appropriate forces are applied to the laminate structure, the foam layer will tear slightly to pull away from the adjacent surface of the skin layer but the skin layer itself resist tearing and only stretches but will not break until stretched beyond the elastic limit of the skin.

The present invention particularly provides such a sheet for use as a solvent seal sleeve on containers, the sleeve also being sealable by ultrasonic, hot air and heat sealing. The outer skin of the multilayer sheet is desirably decoratable.

The blend preferably comprises about 35 to 60% by weight, more preferably about 38 to 45% by weight of the high density polyethylene.

Preferably the blend comprises about 38 to 45% by weight of the compatibility agent. The amount of bound styrene in the block copolymer compatibility agent is usually about 35 to 55% by weight. The number average molecular weight of the block copolymer compatibility agent is usually about 50,000 to 100,000. It is highly desirable that the compatibility agent is compatible with the polyethylene and the polystyrene so as to provide limited compatibility and adhesion at the interface of the skin and the foam layer. The amount of block copolymer is desirably sufficient to balance the adhesion between the foam layer and the skin layer at the interface thereof, the adhesion being enough to prevent premature delamination and tearing and the adhesion being low enough to maximize the toughness of the total label structure.

The blend preferably comprises about 15 to 25% by weight of polystyrene. Of particular utility is a blend comprising about 40% by weight of high density polyethylene, about 40% by weight of the compatibility agent and about 20% by weight of polystyrene. The present invention also includes use of a blend comprising about 40% by weight of high density polyethylene, about 20% by weight of compability agent and about 40% by weight of polystyrene.

The multilayer sheet may of course be a two-layer sheet. The present invention also provides a container and a sheet label therefor, the sheet label being the multilayer sheet of the present invention with the foam layer being on the inside of the sheet next to the container.

The container may be an oriented carbonate beverage container, particularly a polyethylene terephthalate bottle. Other suitable containers are glass containers and cans.

The block copolymer is one of styrene and butadiene prepared, for example by anionic polymerization. The copolymers are thermoplastic rubbers, showing the behaviour of vulcanized elastomers at room temperature, with hard chain length blocks of styrene acting similarily to crosslinks to prevent creep in the polybutadiene block matrix. At higher temperatures, they undergo normal plastic flow.

The butadiene component of the copolymer can be replaced by isoprene or ethylene butylene as, for instance, is available as Kraton™ rubber materials including 1102 and 1107 from Shell Chemical. (The words having the suffix "TM", throughout this Description, are Trade Marks).

Stereon 840A and other Stereon™ elastomers, available from Firestone, Akron, Ohio, are preferred butadiene-styrene block copolymer elastomers, the preferred block copolymer containing about 35 to 55% by weight bound styrene and having a number average molecular weight of about 50,000 to 100,000. Stereon 840A brochures list two of the block copolymers having 53 to 43% by weight bound styrene and number average molecular weight about 60,000 to 80,000.

The present invention will now be further described with reference to, and as illustrated in, the accompanying drawings in which:—

Figure 1 is an elevational view of a container, the container being an oriented plastics container with a base cup;

Figure 2 is a perspective view of the container of Figure 1 with a plastics oriented sleeve label made according to the present invention being partially wrapped around the container;

Figure 3 is a top plan view of the coextruded multilayer plastics label shown in Figure 2, the label having a finite area near its trailing edge and finite areas near its leading edge, the finite areas being a viscous tacky solution of the polymer of the foam layer, the solvent, for instance being methylene chloride.

Figure 4 is an enlarged fragmentary sectional view of the label showing a solid skin layer and a foamed layer; and

Figure 5 is a greatly enlarged sectional view of the label showing a slight tear in the foamed layer when stretching forces are applied thereby, the tough skin layer remaining intact.

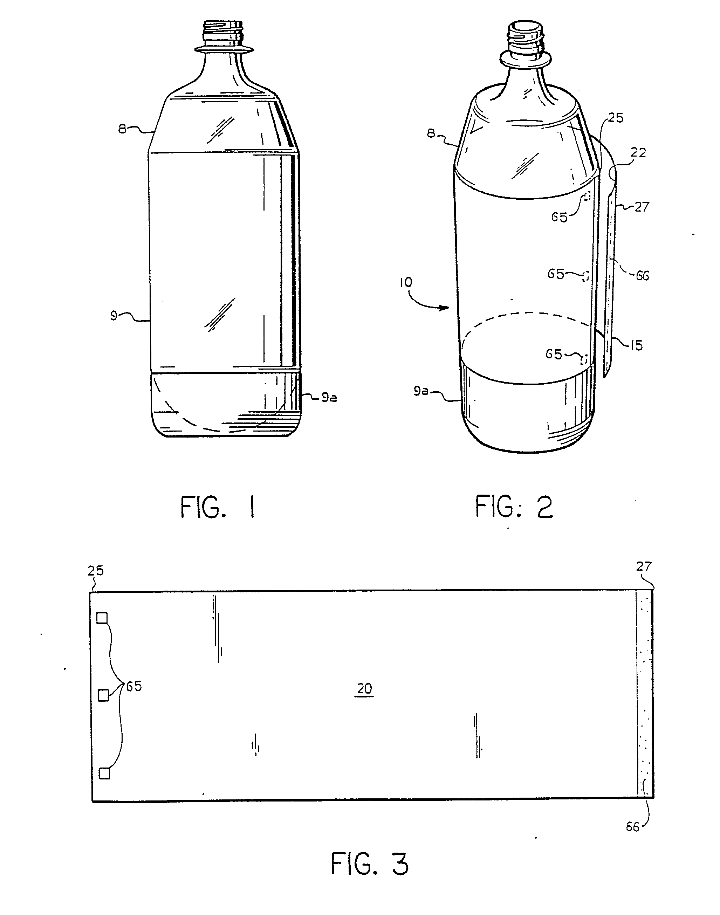

Referring to the drawings, a container 8 having a body portion 9 and a base cup 9a is shown partially wrapped with a label 10 in Figure 2.

As seen in the embodiment shown, in Figures 2 and 3, the label has an outer solid polymer layer 15 and a foam layer 20. The foam layer 20 has an underside 22, a leading edge 25 and a trailing edge 27. Finite areas 65 are provided on the underside near the leading edge and a finite area 66 is provided on the trailing edge. These finite areas are tacky areas of solutions of the foam polymer in a solvent or hot melt adhesive to enable the sleeve to be wrapped around the container and a side seal seam formed. In the alternative, a sleeve can be formed on a mandrel and telescopically moved from the mandrel and around the container encircling the latter to be heat shrunken in firm, conforming contact on the container outer surface. In such case, the side seam of the sleeve may be either hot air or heat sealed.

Coextrusion of multilayer sheets is known in the art, for instance, as generally disclosed in US—A—4,244,900. As is known, heat shrinkable multilayer sheets for heat shrunk sleeve labels can be made by coextrusion that comprises concurrently extruding a foamed film (for instance, a polystyrene foamed film) and a nonfoamed solid skin film (for instance, a polystyrene film). The foamed film side of the laminate is generally cooled more quickly than the skin film, the foamed side having more shrinkage than the skin side when later used as a heat shrunk sleeve label for containers.

The skin and foam layers are oriented and will shrink down on the container when heated, say above the softening point ($t_g$) of the foam material around, for instance, 82°C or 93°C (180°F and 200°F) up to 110°C or 121°C (230°F or 250°F) or more. The heat for shrinking the sleeve labels in high speed production operations is often infrared sources as is known in the art. Method and apparatus for applying heat shrunk plastic sleeve labels to containers are shown in US—A—3,959,065 and US—A—3,767,496, both of which have been assigned to the present Applicant.

In accordance with the present invention, it is now recognized that the tough skin 15 and brittle foam 20 must not be too well bonded or the benefits of the toughness of the skin will be lost. As seen in the greatly enlarged cross section shown in Figure 5, the shear bond strength of the skin and foam layers is less than the yield strength of the tough skin to maximize the toughness of the total label structure. When forces are applied to the laminate in the direction of the arrows shown in Figure 5, the foam layer 20 tears slightly at 70 to pull away from the adjacent surface 75 of the skin. The skin resists tearing and stretches and necks down slightly at 80 but does not break coincidentally with the polystyrene foam.

Although not wishing to be bound by theory, the suggested label structure can be illustrated by a number of styrenic sites near and at the interface of the skin and foam layers. The sites are very small styrenic groups that are located randomly in the skin layer and generally predominantly in the foam layer to form compatible bonding areas in sites along the interface, especially when solvent sealing is employed to make and seal the side seam. Apparently there is an intermingling of the molecules of styrene in the skin and the foam. The more sites that are in the structure, the stronger the bond between the foam and skin layers. Hence, to obtain the more desirable limited adhesion, the fewer the sites, the lower the bond strength.

Polystyrene is a highly preferred polymer for the foam layer. The polystyrene may be crystal or impact grade polystyrene. A suitable polystyrene foam, is generally a low density foam, say about 0.048 or 0.064 g/cm.$^3$ (3 or 4 lbs. per cubic foot) up to 0.224 or 0.240 g/cm.$^3$ (14 or 15 lbs. per cubic foot) or a medium to high density foam of about 0.240 g/cm.$^3$ (15 lbs. per cubic foot) to 0.72 or 0.80 g/cm.$^3$ (45 or 50 lbs. per cubic foot).

Other preferred polymers that can be used for part or all of the polystyrene, for most applications, are styrenic polymers such as copolymers of styrene and a vinyl copolymerizable monomer including vinyl acetate, vinyl chloride, vinylidene chloride and acrylic and acrylate monomers such as methyl methacrylate and ethyl methacrylate. It is preferred that the amount of styrene in styrenic polymer be at least about 40 or 50% by weight and, for best results, about 60 to 75%.

The thickness of the foam layer can vary from about 0.025 to 0.050 mm (1 or 2 mils) up to about 0.375 or 0.5 mm (15 or 20 mils), but the preferred thickness is about 0.2 to 0.25 mm (8 to 10 mils).

An outstanding label is one that has two layers, it being a coextruded structure of a solid polymer skin layer and a foamed layer. The solid skin layer of the multilayered label can be about $6.25 \times 10^{-3}$ or 0.0125 mm ($\frac{1}{4}$ or $\frac{1}{2}$ mil) to 0.125 mm (5 mils) in thickness and the foam layer about 0.075 to 0.5 mm (3 to 20 mils) and preferably 0.10 to 0.30 mm (4 to 12 mils).

Good results have been obtained with a total label structure of a 0.05 mm (2 mils) skin layer of 40% by weight high density polyethylene, 40% by weight of a block copolymer of styrene and butadiene having 43% by weight bound styrene, and a number average molecular weight of about 80,000 and 20% by weight polystyrene, the skin layer being bonded to a coextruded foam layer of about 0.125 mm (5 mils), the foam layer and skin layer having the same composition. Good results also have been obtained with a label as above described with 50% by weight high density polyethylene, 30% by weight of the copolymer, and 20% by weight of polystyrene.

These specific blend compositions have provided tough, solvent sealable labels, in which methylene chloride was used as the solvent in the solvent sealing system.

The solvent sealing of multilayer labels is disclosed in our European Patent Specification 0143621.

The tough skin/brittle foam coextruded laminate may be protected from degradation from heat, light and oxygen by antioxidants or other stabilizers including UV absorbers, hindered amine light stabilizer, antioxidants and nickel quenchers. Suitable stabilizers include UV stabilizers based on hydroxy phenyl benzotriazole including Tinuvin™ 328 (Ciba-Geigy); hindered amine light stabilizers including Tinuvin™ 292 (Ciba-Geigy); antioxidants including Iganox hindered phenolic compounds such as Iganox™ 1010, 1076 and B225 (Ciba-Geigy) a synergistic mixture of an organophosphite and a hindered phenol; and a nickel phosphonate such as Irgastab™ 2002 (Ciba-Geigy).

**Claims**

1. A coextruded multilayer sheet, adapted for use as a label sleeve on containers, the sheet comprising a foam layer for use on the inside of the sleeve next to the container, and an outer solid skin layer, characterized in that the skin layer and foam layer are coextruded from an extrudable blend comprising 30% by weight to 60% by weight of high density polyethylene, 10% by weight to 30% by weight of polystyrene, and 30% by weight to 50% by weight of a compatibility agent providing limited adhesion between the layers.

2. A coextruded multilayer sheet according to claim 1 wherein the blend comprises 15 to 25% by weight of polystyrene.

3. A coextruded multilayer sheet according to claim 1 or 2 wherein the blend comprises 38 to 45% by weight of the high density polyethylene.

4. A coextruded multilayer sheet according to any of claims 1 to 3 wherein the compatibility agent is a block copolymer of styrene and butadiene.

5. A coextruded multilayer sheet according to claim 4 wherein the amount of bound styrene in the block copolymer is 35 to 55% by weight.

6. A coextruded multilayer sheet according to any of claims 1 to 5 wherein the blend comprises 38 to 45% by weight of the compatibility agent.

7. A coextruded multilayer sheet according to any of claims 4 to 6 wherein the number average molecular weight of the block copolymer is 50,000 to 100,000.

8. A coextruded multilayer sheet according to any of claims 1 to 7 wherein the blend is substantially 40% by weight of high density polyethylene, substantially 40% by weight of the compatibility agent and substantially 20% by weight of polystyrene.

9. A coextruded multilayer sheet according to any of claims 1 to 8 wherein the blend includes an antioxidant to prevent degradation of the blend by exposure to heat and oxygen.

10. A coextruded multilayer sheet according to any of claims 1 to 9 which is a two layer sheet.

11. A coextruded sheet according to any of claims 1 to 10 wherein the outer solid skin layer is capable of forming a seal seam bond with the foam layer.

12. A coextruded sheet according to any of claims 1 to 11 wherein the sleeve ends are overlapped to form a side seam.

13. A container having a coextruded multilayer sheet label, characterized in that the sheet label is according to any of claims 1 to 12, the foam layer being on the inside of the sheet next to the container.

14. A container having a coextruded multilayer sheet label according to claim 13 having the sheet label as a solvent sealable sleeve on the container, but the sleeve also being sealable by ultrasonic, hot air or heat sealing.

15. A container having a coextruded multilayer sheet label according to claim 13 or 14 wherein the outer solid skin layer of the sheet label is capable of being decorated.

16. A container having a coextruded multilayer sheet label according to any of claims 13 to 15 wherein methylene chloride is used to solvent seal a side seam of the sleeve label.

17. A container having a coextruded multilayer sheet label according to any of claims 13 to 16 wherein the container is an oriented plastic carbonated beverage container.

18. A container having a coextruded multilayer sheet label according to claim 17 wherein the container is an oriented polyethylene terephthalate carbonated beverage bottle.

19. A container having a coextruded multilayer sheet label according to any of claims 13 to 16 wherein the container is a glass container.

20. A container having a coextruded multilayer sheet label according to any of claims 13 to 16 wherein the container is a can.

**Patentansprüche**

1. Koextrudierte mehrschichtige Folie für eine Etiketthülse auf Behältern, bestehend aus einer Schaumstoffschicht auf der Innenseite der Hülse direkt am Behälter und einer äußeren festen Hautschicht, dadurch gekennzeichnet, daß die Hautschicht und die Schaumstoffschicht aus einer extrudierbaren Mischung koextrudiert werden, die zu 30 bis 60 Gew.-% aus Polyethylen mit hoher Dichte, zu 10 bis 30 Gew.-% aus Polystyrol und zu 30 bis 50 Gew.-% aus einem Verträglichkeitsmittel besteht, das für eine begrenzte Adhäsion zwischen den Schichten sorgt.

2. Folie nach Anspruch 1, bei der die Mischung zu 15 bis 25 Gew.-% aus Polystyrol besteht.

3. Folie nach den Ansprüchen 1 oder 2, bei der Mischung zu 38 bis 45 Gew.-% aus Polyethylen mit hoher Dichte besteht.

4. Folie nach einem der Ansprüche 1 bis 3, bei der das Verträglichkeitsmittel ein Blockcopolymerisat aus Styrol und Butadien ist.

5. Folie nach Anspruch 4, bei der der Gehalt an gebundenem Styrol in dem Blockcopolymerisat zwischen 35 und 55 Gew.-% liegen.

6. Folie nach einem der Ansprüche 1 bis 5, bei der die Mischung zu 38 bis 45 Gew.-% aus dem Verträglichkeitsmittel besteht.

7. Folie nach einem der Ansprüche 4 bis 6, bei der das Molekulargewicht des Blockcopolymerisates im Zahlenmittel zwischen 50 000 und 100 000 liegt.

8. Folie nach einem der Ansprüche 1 bis 7, bei der die Mischung im wesentlichen zu 40 Gew.-% aus Polyethylen mit hoher Dichte, im wesentlichen zu 40 Gew.-% aus dem Verträglichkeitsmittel und im wesentlichen zu 20 Gew.-% aus Polystyrol besteht.

9. Folie nach einem der Ansprüche 1 bis 8, bei der die Mischung ein Antioxidationsmittel enthält, um eine Zersetzung der Mischung durch Hitzeeinwirkung und Sauerstoff zu verhindern.

10. Folie nach einem der Ansprüche 1 bis 9, bei der es sich um eine zweischichtige Folie handelt.

11. Folie nach einem der Ansprüche 1 bis 10, bei der die äußere feste Hautschicht eine mit der Schaumstoffschicht verbundene Schweißnaht bilden kann.

12. Folie nach einem der Ansprüche 1 bis 11, bei der die Hülsenenden überlappend ausgebildet sind, um eine seitliche Naht zu bilden.

13. Behälter mit einem koextrudierten, mehrschichtigen Folienetikett, dadurch gekennzeichnet, daß es sich um ein Folienetikett nach einem der Ansprüche 1 bis 12 handelt und die Schaumstoffschicht sich auf der Innenseite der Folie direkt an dem Behälter befindet.

14. Behälter nach Anspruch 13, auf dem sich das Folienetikett als lösungsmittelverschweißbare Hülse befindet, wobei die Hülse jedoch auch durch Ultraschall, Heißluft oder Heißsiegeln verschweißt werden kann.

15. Behälter nach den Ansprüchen 13 oder 14, bei dem die äußere feste Hautschicht des Folienetikettes dekoriert werden kann.

16. Behälter nach einem der Ansprüche 13 bis 15, bei dem zum Lösungsmittelverschweißen der seitlichen Naht der Etiketthülse Methylenchlorid verwendet wird.

17. Behälter nach einem der Ansprüche 13 bis 16, bei dem es sich um einen orientierten Kunststoffbehälter für kohlensäurehaltige Getränke handelt.

18. Behälter nach Anspruch 17, bei dem es sich um eine orientierte Polyethylenterephthalatflasche für kohlensäurehaltige Getränke handelt.

19. Behälter nach einem der Ansprüche 13 bis 16, bei dem es sich um einen Glasbehälter handelt.

20. Behälter nach einem der Ansprüche 13 bis 16, bei dem es sich um eine Konservenbüchse handelt.

**Revendications**

1. Feuille multicouche coextrudée, apte à être utilisée en tant que manchon-étiquette sur des récipients, la feuille comprenant une couche de mousse à utiliser à l'intérieur du manchon en continguïté avec le récipient, et une couche pelliculaire continue externe, caractérisée en ce que la couche pelliculaire et la couche de mousse sont coextrudées à partir d'un mélange extrudable comprenant 30% en poids à 60% en poids de polyéthylène haute densité, 10% en poids à 30% en poids de polystyrène, et 30% en poids à 50% en poids d'un agent de compatibilité procurant une adhérence limitée entre les couches.

2. Feuille multicouche coextrudée selon la revendication 1, dans laquelle le mélange comprend de 15 à 25% en poids de polystyrène.

3. Feuille multicouche coextrudée selon la revendication 1 ou 2, dans laquelle le mélange comprend de 38 à 45% en poids du polyéthylène haute densité.

4. Feuille multicouche coextrudée selon l'une quelconque des revendications 1 à 3, dans laquelle l'agent de compatibilité est un copolymère séquencé de styrène et butadiène.

5. Feuille multicouche coextrudée selon la revendication 4, dans laquelle la quantité de styrène lié dans le copolymère séquencé est de 35 à 55% en poids.

6. Feuille multicouche coextrudée selon l'une quelconque des revendications 1 à 5, dans laquelle le mélange comprend de 38 à 45% en poids de l'agent de compatibilité.

7. Feuille multicouche coextrudée selon l'une quelconque des revendications 4 à 6, dans laquelle la masse moléculaire moyenne en nombre du copolymère séquencé va de 50 000 à 100 000.

8. Feuille multicouche coextrudée selon l'une quelconque des revendications 1 à 7, dans laquelle le mélange est composé de pratiquement 40% en poids de polyéthylène haute densité, pratiquement 40% en poids de l'agent decompatibilité et pratiquement 20% en poids de polystyrène.

9. Feuille multicouche coextrudée selon l'une quelconque des revendications 1 à 8, dans laquelle le mélange comprend un antioxydant pour empêcher la dégradation du mélange par exposition à la chaleur et à l'oxygène.

10. Feuille multicouche coextrudée selon l'une quelconque des revendications 1 à 9, laquelle est une feuille à deux couches.

11. Feuille coextrudée selon l'une quelconque des revendications 1 à 10, dans laquelle la couche pelliculaire continue externe est capable de former une liaison par joint soudé avec la couche de mousse.

12. Feuille coextrudée selon l'une quelconque des revendications 1 à 11, dans laquelle les extrémités du manchon sont superposées pour former un joint latéral.

13. Récipient comportant une étiquette en feuille multicouche coextrudée, caractérisé en ce que l'étiquette en feuille est selon l'une quelconque des revendications 1 à 12, la couche de mousse étant à l'intérieur de la feuille en contiguïté avec le récipient.

14. Récipient comportant une étiquette en feuille multicouche coextrudée selon la revendication 13, comportant l'étiquette en feuille sous forme d'un manchon soudable au solvant sur le récipient, le manchon étant cependant également soudable par soudage aux ultrasons, à l'air chaud ou à la chaleur.

15. Récipient comportant une étiquette en feuille multicouche coextrudée selon la revendication 13 ou 14, dans lequel la couche pelliculaire continue externe de l'étiquette en feuille est apte à être décorée.

16. Récipient comportant une étiquette en feuille multicouche coextrudée selon l'une quelconque des revendications 13 à 15, dans lequel on utilise du chlorure de méthylène pour souder au solvant un joint latéral de l'étiquette-manchon.

17. Récipient comportant une étiquette en feuille multicouche coextrudée selon l'une quelconque des revendications 13 à 16, caractérisé en ce que le récipient est un récipient en plastique orienté pour boisson gazéifiée.

18. Récipient comportant une étiquette en feuille multicouche coextrudée selon la revendication 17, caractérisé en ce que le récipient est une bouteille pour boisson gazéifiée, en poly(téréphtalate d'éthylène) orienté.

19. Récipient comportant une étiquette en feuille multicouche coextrudée selon l'une quelconque des revendications 13 à 16, caractérisé en ce que le récipient est un récipient en verre.

20. Récipient comportant une étiquette en feuille multicouche coextrudée selon l'une quelconque des revendications 13 à 16, caractérisé en ce que le récipient est une boîte de type canette.

FIG. 1

FIG. 2

FIG. 3

FIG. 4

FIG. 5